# EUROPÄISCHE PATENTSCHRIFT

(11) **EP 3 948 386 B1**
(45) Veröffentlichungstag und Bekanntmachung des Hinweises auf die Patenterteilung: **19.03.2025**
(21) Anmeldenummer: 20714950.1
(22) Anmeldetag: 19.03.2020
(51) Int. Cl.: G02B 7/182, B60R 1/072

(54) **SICHTEINSTELLMECHANISMUS UND STELLMITTEL FÜR EINEN SOLCHEN**
VIEW ADJUSTING MECHANISM AND ADJUSTING MEANS FOR SUCH A VIEW ADJUSTING MECHANISM
MÉCANISME DE RÉGLAGE DE VISÉE ET MOYEN DE RÉGLAGE ASSOCIÉ

(30) Priorität: 29.03.2019 DE 102019108303
(43) Veröffentlichungstag der Anmeldung: 09.02.2022
(73) Patentinhaber: MCi (Mirror Controls International) Netherlands B.V., 3447 GK Woerden (NL)
(72) Erfinder: BOUAZIZ, François Roderik Henri, 3447 GK Woerden (NL); VAN STIPHOUT, Paulus Gerardus Maria, 3447 GK Woerden (NL); BROUWER, Stefan Fritz, 3447 GK Woerden (NL); MAAT, Bastiaan Bartjan, 3447 GK Woerden (NL); BEKKER, Anne Catharina Martha, 3447 GK Woerden (NL); JANSEN, Tom Adriaan, 3447 GK Woerden (NL); LORIER, Alex, 3447 GK Woerden (NL)
(74) Vertreter: V.O.
(86) Internationale Anmeldenummer: PCT/EP2020/057647
(87) Internationale Veröffentlichungsnummer: WO 2020/200819

(56) Entgegenhaltungen:
- DE-A1- 102017 003 118
- DE-A1- 102017 003 118

## Beschreibung

Vorliegende Erfindung betrifft ein Stellmittel zum Einstellen der Position eines ersten Teils, insbesondere eines Sichtmittelhalters für ein Sichtmittel, wie beispielsweise einen Spiegel oder eine Kamera, relativ zu einem zweiten Teil, insbesondere einem Basisteil, umfassend wenigstens ein Stellglied, über den das erste Teil relativ zum zweiten Teil bewegbar und insbesondere verschwenkbar ist.

Darüber hinaus betrifft vorliegende Erfindung einen Sichteinstellmechanismus, insbesondere für einen Seitenspiegel oder eine Kameraunit eines Motorfahrzeugs, umfassend die obigen ersten und zweiten Teile sowie ein entsprechendes Stellmittel.

Derartige Stellmittel bzw. Sichteinstellmechanismen sind aus dem Stand der Technik bekannt. Sie dienen unter anderem dem Verstellen eines Sichtmittels, beispielsweise eines Spiegels oder einer Kameraunit an einem Fahrzeug. Das Verstellen erfolgt meist motorgetrieben, kann aber auch manuell erfolgen. Hierfür ist meist ein entsprechender Stellantrieb vorgesehen, der eine Bewegung des ersten Teils relativ zum zweiten Teil und somit des Sichtmittels erlaubt. Meist ist der erste Teil relativ zum zweiten Teil verschwenkbar ausgeführt, es sind aber auch andere Bewegungen zwischen erstem Teil und zweitem Teil denkbar.

Bisweilen ist es gewünscht, bei solchen Stellmitteln bzw. Sichteinstellmechanismen einen Positionsdetektor vorzusehen, der die Detektion der Positionen des ersten Teils relativ zum zweiten Teil, und insbesondere eines Schwenkwinkels zwischen erstem und zweitem Teil, erlaubt. Eine detektierte Position kann beispielswiese einer Speichereinheit zugeführt und dort gespeichert werden, um sie optional zu einem späteren Zeitpunkt wieder zurückzuspielen. Auf diese Weise kann u.a. für unterschiedliche Benutzer eine spezielle Sichtmittelausrichtungen, bspw. eine Spiegelposition etc. gespeichert und automatisch nach einem Nutzerwechsel wieder eingestellt werden. Auch können spezielle Sichtmittelausrichtungen, beispielsweise für den Rangierbetrieb, Fahrbetrieb, Parkbetrieb etc. gespeichert und eingestellt werden.

Zu obigen Stellmitteln und Sichtmitteleinstellmechanismen ist eine Vielzahl an Ausführungsbeispielen aus dem Stand der Technik bekannt, die jedoch meist einen sehr komplexen und daher meist Raum nehmenden Aufbau aufweisen.

Die DE 10 2017 003 118 Al beschreibt eine Verschwenkeinrichtung zum Verschwenken eines ersten Teils relativ zu einem zweiten Teil, bei dem an einer gebogen Zahnstange wenigstens zwei Zahnkränze angeordnet sind, die jeweils mit unterschiedlichen Zahnrädern in Wirkverbindung stehen. Die Detektion der Relativpositionen ist nicht thematisiert.

Aufgabe der vorliegenden Erfindung ist es folglich, ein Stellmittel bzw. einen Sichteinstellmechanismus zur Verfügung zu stellen, der einen einfachen optional kleinen Aufbau bei sehr genauer Positionsdetektion erlaubt.

Diese Aufgabe wird durch ein Stellmittel und einen Sichteinstellmechanismus gemäß den unabhängigen Ansprüchen gelöst.

Insbesondere wird diese Aufgabe gelöst durch ein Stellmittel zum Einstellen der Position eines ersten Teils, nämlich eines Sichtmittelhalterteils für ein Sichtmittel, relativ zu einem zweiten Teil, nämlich einem Basisteil, umfassend: wenigstens ein Stellglied über den das erste Teil relativ zum zweiten Teil bewegbar und insbesondere verschwenkbar ist, wobei das Stellglied wenigstens ein erstes Zahnkranzsegment und wenigstens ein zweites Zahnkranzsegment aufweist, wobei das zweite Zahnkranzsegment mit wenigstens einem Aktor, nämlich einem Stellantrieb, kraftgekoppelt ist, sodass über den Stellantrieb der erste Teil relativ zum zweiten Teil, bewegbar ist, und wobei das erste Zahnkranzsegment des Stellgliedes mit wenigstens einem Detektor, nämlich einem Positionsdetektor, kraftgekoppelt ist, wobei das erste Zahnkranzsegment mit einem ersten Ritzel in Kraftkopplung steht, das den Positionsdetektor antreibt, bei dem über die aufgebrachte Bewegung ein Detektionssignal initiiert wird, durch das eine Positionsdetektion des ersten Teils relativ zum zweiten Teil möglich ist.

Darüber hinaus wird diese Aufgabe gelöst durch einen Sichteinstellmechanismus, , insbesondere für einen Seitenspiegel oder eine Kameraunit eines Motorfahrzeugs, umfassend ein erstes Teil, insbesondere ein Sichtmittelhalterteil für ein Sichtmittel, wie beispielswiese einen Spiegel oder eine Kamera, und ein relativ dazu bewegbar und insbesondere verschwenkbar angeordnetes zweites Teil, insbesondere ein Basisteil, und wenigstens ein Stellmittel wie es hier beschreiben ist.

Kern der Erfindung ist unter anderem die Verwendung wenigstens eines Stellglieds, das ein erstes Zahnkranzsegment und ein zweites Zahnkranzsegment aufweist, die jeweils unterschiedliche Aktoren und Detektoren, nämlich Stellantriebe und Positionsdetektoren, bedienen. Unter einem Aktor wird im Umfang der Erfindung ein Bauteil verstanden, das eine Bewegung initiieren kann. Unter einem Detektor wird ein Bauteil verstanden, das ein Signal initiieren kann. Ein Detektor ist also ein Positionsdetektor, , bei dem über eine aufgebrachte Bewegung ein ein Detektionssignal, initiiert wird.. Ein Aktor ist im Umfang der Erfindung ein Stellantrieb, bei dem über ein Stellsignal eine Bewegung, und insbesondere eine Verstellbewegung, wirkend zwischen dem ersten und dem zweiten Teil, initiiert wird. Es sei erwähnt, dass, wie eingangs erwähnt, optional auch das zweite Teil ein Sichtmittelhalterteil für ein Sichtmittel und das erste Teil ein Basisteil sein kann.

Selbiges gilt optional auch für die Kraftkopplung zwischen dem ersten Zahnkranzsegment und dem Positionsdetektor bzw. dem zweiten Zahnkranzsegment und dem Stellantrieb. Anstelle des Positionsdetektors kann ein Stellantrieb und anstelle des Stellantriebes ein Positionsdetektor vorgesehen sein.

Obiges bedeutet, dass die hier besprochenen Bauteile optional wahlweise am ersten und/oder am zweiten Teil ausgebildet sein können.

Die Verwendung eines Stellglieds mit erstem und zweitem Zahnkranzsegment, erleichtert die platzsparende Herstellung des Stellmittels und trägt darüber hinaus einer hohen Genauigkeit der Positionsdetektion Rechnung.

Optional ist das Stellglied am ersten Teil ortsfest und/oder gelenkig gelagert und/oder ist der Stellantrieb, am zweiten Teil gelagert. Über eine Kraftkopplung zwischen Stellantrieb und Stellglied kann auf diese Weise eine direkte Kraftkopplung zwischen zweitem Teil und erstem Teil geschaffen werden. Durch den Stellantrieb kann der erste Teil relativ zum zweiten Teil bewegt und insbesondere verschwenkt werden. Optional ist insbesondere in diesem Zusammenhang der erste Teil gelenkig am zweiten Teil, und insbesondere verschwenkbar dazu, gelagert.

Insbesondere ist das Stellglied als eine Schubstange und insbesondere in Kreisbogenform ausgebildet. Über eine Bewegung und insbesondere eine Axialbewegung der Schubstange insbesondere in seiner Hauterstreckungsrichtung, kann so das erste Teil relativ zum zweiten Teil bewegt werden. Optional ist der Lagerpunkt der Schubstange am ersten und/oder zweiten Teil außerhalb des Drehpunktes zwischen erstem und zweitem Teil angeordnet. Die Ausbildung der des Stellgliedes bzw. der Schubstange in einer Kreisbogenform erleichtert die Einbindung, wie im Folgenden noch beschrieben, der zuvor erwähnten ersten und zweiten Zahnkranzsegmente und die Kopplung mit dem jeweiligen Aktor bzw. Detektor.

Optional ist das Stellglied um wenigstens eine erste Achse verschwenkbar ausgebildet. Über das Verschwenken kann das erste Teil zum zweiten Teil bewegt werden.

Optional sind das erste Zahnkranzsegment und das zweite Zahnkranzsegment zur ersten Achse zentriert ausgebildet. Das erste Zahnkranzsegment und/oder das zweite Zahnkranzsegment weisen vorzugsweise eine Kreisbogenform auf. Das erste Zahnkranzsegment und das zweite Zahnkranzsegment weisen optional eine gemeinsame Segmentachse auf. Darunter wird die jeweilige Achse verstanden, um die das Segment gebogen ist. Die Segmentachse ist optional die erste Achse. Es ist denkbar, dass das erste Zahnkranzsegment einen zum zweiten Zahnkranzsegment unterschiedlich langen Radius zu dieser ersten Achse aufweist.

Optional ist das erste Zahnkranzsegment ein Kronenradsegment und/oder Teil einer Kronenradverzahnung. Der Vorteil einer solchen Ausführungsform ist eine sehr genaue Kraftkopplung zwischen erstem Zahnkranzsegment und Positionsdetektor und so einer sehr genauen Positionsdetektion. Insbesondere bei der Ausbildung des Zahnkranzsegments derart, dass es Teil einer Kronenradverzahnung ist, kann auf sehr genaue, platzsparende und fehlerredundante Weise eine Bewegung des Positionsdetektors erfolgen. Bei einer solchen Ausführungsform wird optional durch die über das Zahnkranzsegment auf den Positionsdetektor initiierte Bewegung ein Positionssignal erzeugt. Dies ist insbesondere dann möglich, wenn der Positionsdetektor ein Potentiometer aufweist, optional antreibt. Über eine Bewegung des Zahnkranzsegments kann so ein Positionssignal, das die Stellung des ersten Teils relativ zum zweiten Teil wiedergibt, erzeugt werden.

Das erste Zahnkranzsegment steht mit einem ersten Ritzel und insbesondere einem ersten Evolventen-Ritzel in Kraftkopplung und insbesondere in direkter Verzahnung. Das Ergebnis, insbesondere in Kombination mit einem als Kronenradsegment ausgeführten ersten Zahnkranzsegment, ist eine Kronenradverzahnung, die eine sehr genaue Kraftkopplung zwischen Stellmittel und Positionsdetektor sicherstellt. Zudem kommen die einer Kronenradverzahnung inhärenten Vorteile voll zum Tragen.

Optional ist das erste Ritzel zu einer zweiten Achse zentriert rotierbar, wobei die zweite Achse zur ersten Achse verschwenkt ist und insbesondere senkrecht dazu verläuft. Hier sind auch der Fall einer geraden Verzahnung und der einer Schrägverzahnung zwischen erstem Ritzel und erstem Zahnkranzsegment umfasst. Optional weist nämlich das erste Ritzel einen Zahnwinkel von ungleich 0° oder gleich 0° auf. Optional scheidet die zweite Achse die erste Achse nicht. Optional liegt die zweite Achse in einer Ebene, die zu der ersten Achse verschwenkt ist und insbesondere optional in einer Ebene, die zur ersten Achse orthogonal verläuft.

Der Vorteil einer Kronenradverzahnung liegt unter anderem daran, dass eine Axialausrichtung des zweiten Ritzels variabel gestaltet werden kann. Das zweite Ritzel kann also in bestimmten Bereichen entlang der zweiten Achse axial verschoben werden. Diese und weitere Vorteile ergeben sich insbesondere aus der Ausbildung des zweiten Ritzels als Evolventenritzel.

Optional gilt insbesondere bei der erwähnten Kronenradverzahnung bzw. dem als Kronenradsegment ausgebildeten Zahnkranzsegment, dass sich das Stellglied und insbesondere das bogenförmig ausgebildete Stellglied innerhalb einer Stellgliedebene erstreckt, wobei die Zähne des ersten Zahnkranzsegments senkrecht dazu angeordnet sind. Optional haben die Zähne einen gleichen Modul, aber verschiedene Eingriffswinkel entlang ihrer Zahnbreite.

Wie erwähnt ist der Vorteil einer solchen Kronenradverzahnung, dass die axiale Lagerung des Ritzels in Bereichen frei einstellbar ist. Optional ist die Verzahnung derart ausgebildet, dass bei in Bereichen variablem Abstand die Kraftübersetzung konstant bleibt. Dadurch ist optional der Abstand der zweiten Achse, also der Ritzelachse des ersten Ritzels, gegenüber der Kopfebene des Kronenzahnrads, hier also der Ebene des ersten Zahnkranzsegments, in Bereichen variabel gestaltbar. Optional ist die Verzahnung derart ausgebildet, dass bei variablem Abstand die Übersetzung konstant bleibt. Es ist denkbar, das erste Ritzel und oder das erste Zahnkranzsegment gerade oder schräg verzahnt auszubilden. In Bezug auf die Ausbildung von Kronenradverzahnungen wird explizit auf folgende Veröffentlichung Bezug genommen: Karlheinz Roth - Zahnradtechnik - Evolventen-Sonderverzahnungen zur Getriebeverbesserung, Springer - ISBN 3-540642366, p. 305ff.

Optional gilt für die optional senkrecht zu ersten Achse verlaufende zweite Achse also eine 90°-Verzahnung des ersten Zahnsegments relativ zum ersten Ritzel. Auch hier ist eine gerade Verzahnung oder eine Schrägverzahnung anwendbar.

Optional ist das erste Ritzel zu einer zweiten Achse A₂ zentriert und insbesondere rotierbar, wobei die zweite Achse A₂ zur ersten Achse A₁ einen Schwenkwinkel von α>0°, und insbesondere vorzugsweise α=90°, aufweist.

Das erste Ritzel treibt den Positionsdetektor an. Grundsätzlich und insbesondere in diesem Zusammenhang, kann der Positionsdetektor ein Potentiometer umfassen, das über dieses erste Ritzel angetrieben wird. Der Positionsdetektor kann wenigstens einen Positionssensor, insbesondere ein Potentiometer, einen Hall Sensor, einen Induktiven Sensor, einen Lichtsensor, einen optischen Sensor oder jede andere Art von Sensor umfassen.

Optional weist das erste Ritzel wenigstens einen Kontaktschleifer auf oder steht mit diesem in Wirkverbindung, der mit wenigstens einer insbesondere ringförmigen Kontaktspur, und insbesondere einer Karbonkontaktspur, auf einer Leiterplatte des Potentiometers in Verbindung steht. Über die Verbindung zwischen Kontaktschleifer und Kontaktspur kann, potentiometertypisch, die Stellung des Kontaktschleifers relativ zu einer Nullstellung detektiert und so ein direkter Rückschluss auf die Positionierung des Stellglieds getroffen werden.

Von besonderem Vorteil ist dabei insbesondere die optionale Ausbildung der Leiterplatte mit integrierter (Karbon-)kontaktspur, die vorzugsweise als gedruckte Kontaktspur ausgeführt ist. Auch die Leiterplatte ist vorzugsweise eine gedruckte Leiterplatte, beispielsweise ein PGB. Der Kontaktschleifer ist optional als eigenständiges Bauteil mit dem ersten Ritzel kraftgekoppelt und insbesondere zur zweiten Achse des ersten Ritzels zentriert. Optional bewegt sich der Kontaktschleifer zusammen mit dem ersten Ritzel, wobei er optional derart angeordnet ist, dass er auf der Kontaktspur entlangschleift und so eine Positionsermittlung über das Potentiometer erlaubt. Optional ist die ringförmige Kontaktspur zur zweiten Achse zentriert und insbesondere derart ausgebildet, dass sie die zweite Achse umläuft. Insbesondere ist sie derart ausgebildet, dass sie unterhalb des ersten Ritzels angeordnet ist, wobei zwischen erstem Ritzel und Kontaktspur der Kontaktschleifer ausgebildet ist. Optional ist das erste Ritzel mit seiner zweiten Achse derart ausgebildet, dass es die Leiterplatte durchdringt und in einer Lageeinrichtung gehalten ist. Optional sind wenigstens zwei Kontaktspuren vorgesehen, die über den Kontaktschleifer miteinander verbunden werden. Die wenigstens zwei Kontaktspuren sind optional coaxial als Bögen ausgebildet.

Optional ist das zweite Zahnkranzsegment ein Innen-Evolventen-Zahnkranzsegment oder ein Außen-Evolventen-Zahnkranzsegment und/oder Teil einer Evolventenverzahnung. Optional ist es auch denkbar, dass das zweite Zahnkranzsegment mit einem zweiten Ritzel und insbesondere einem zweiten Evolventen-Ritzel in Kraftkopplung, und insbesondere in direkter Verzahnung, steht. Es ist möglich, das zweite Zahnkranzsegment derart mit dem Stellantrieb zu koppeln, dass über eine Evolventenverzahnung eine Kraftkopplung zwischen zweitem Zahnkranzsegment und dem Stellantrieb besteht. Optional ist der Stellantrieb als Stellmotor ausgebildet, sodass er über ein Antriebssignal eine Verstellung des Stellmittels und somit ein Verstellen des ersten Teils relativ zum zweiten Teil bewirkt. Ein solcher Stellmotor ist vorzugsweise ein Elektromotor.

Optional ist das zweite Ritzel zu einer dritten Achse zentriert, die optional parallel zur ersten Achse verläuft. Auf diese Weise lässt sich ein sehr kompaktes Stellmittel erzielen.

Wie eingangs erwähnt, betrifft die vorliegende Anmeldung nicht nur ein Stellmittel, sondern auch einen Sichteinstellmechanismus, wie er zuvor erwähnt wurde. Aus Redundanzgründen wird auf die einzelnen Merkmale und Ausführungsformen eines solchen Sichteinstellmechanismus nicht im Detail eingegangen, sondern auf die Merkmale, die in Verbindung mit dem Stellmittel erwähnt wurden, verwiesen. Sie sind identisch auf den Sichteinstellmechanismus zu übertragen.

Weitere Ausführungsformen der Erfindung ergeben sich aus den Unteransprüchen.

Im Folgenden wird der Erfindung anhand von Ausführungsbeispielen beschrieben, die durch die beiliegenden Zeichnungen näher erläutert werden. Hierbei zeigen:
Fig. 1 und 2 räumliche Darstellungen einer Ausführungsform eines erfindungsgemäßen Sichteinstellmechanismus in unterschiedlichen Schwenkzuständen;
Fig. 3 eine weitere räumliche freigeschnittene Darstellung des Sichteinstellmechanismus gemäß Fig. 1
Fig. 4 eine räumliche Detaildarstellung einer Ausführungsform des erfindungsgemäßen Stellmittels;
Fig. 5 eine räumliche Explosionsdarstellung des Stellmittels gemäß Fig. 4;
Fig. 6 eine weitere räumliche Detaildarstellung des Stellmittels gemäß Fig. 4;
Fig. 7 eine Detaildarstellung einer Ausführungsform eines Stellglieds;
Fig. 8 eine Detaildarstellung eines ersten Zahnkranzsegments des Stellglieds gemäß Fig. 7;
Fig. 9 eine weitere Detaildarstellung des Stellglieds gemäß Fig. 7 gemäß einer Anordnung gemäß Fig. 4; und
Fig. 10 eine Explosionsdarstellung einer Ausführungsform eines Positionsdetektors, wie er in der Ausführungsform gemäß Fig. 1 verwendet sein kann.

Im Folgenden werden für gleiche und gleich wirkende Bauteile dieselben Bezugsziffern verwendet, wobei bisweilen Hochindizes ihre Anwendung finden können. Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

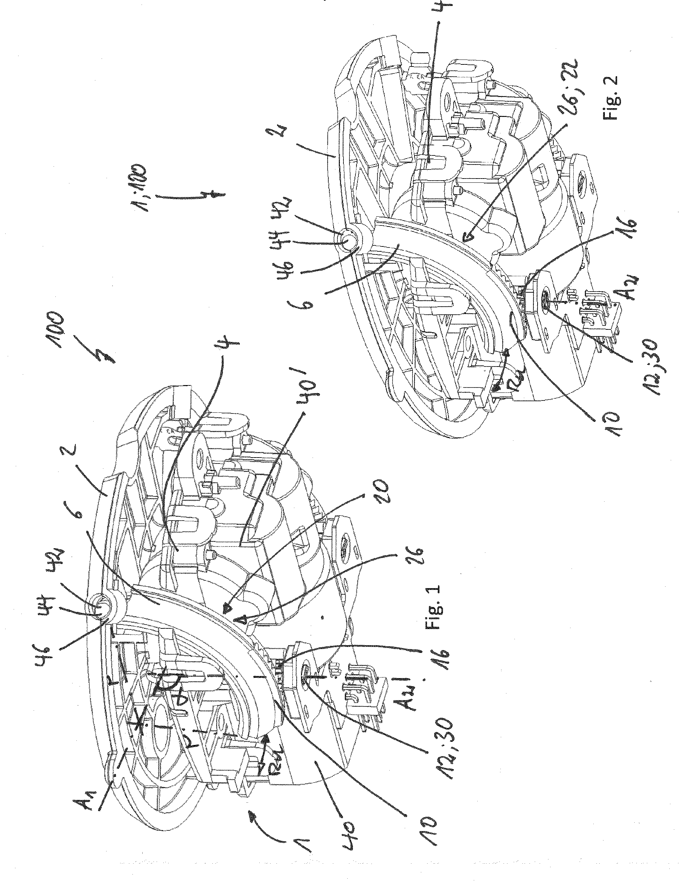

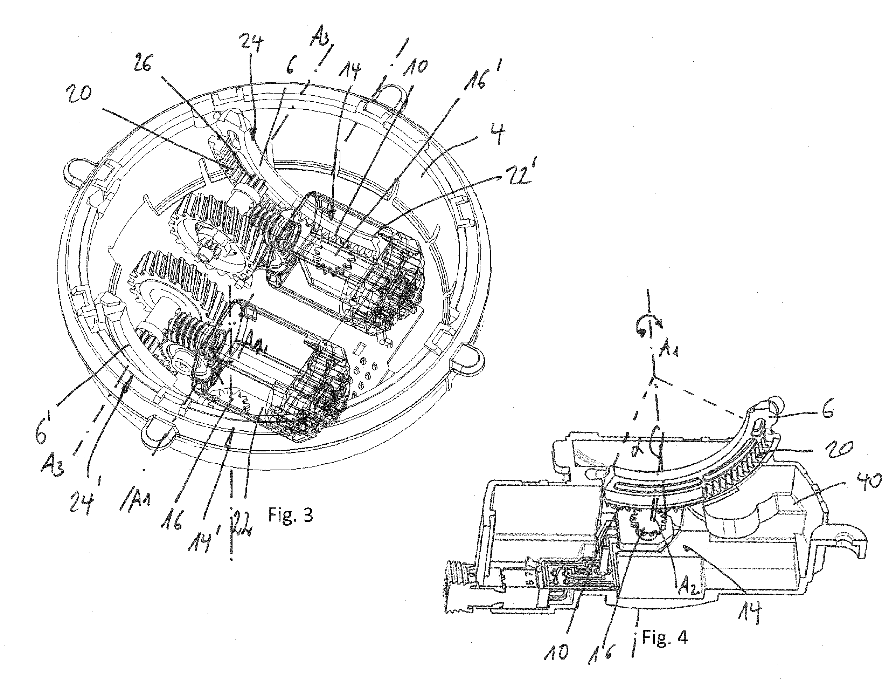

Die Fig. 1 bis 3 zeigen drei räumliche Darstellungen einer Ausführungsform des erfindungsgemäßen Stellmechanismus 100 bzw. einer Ausführungsform des erfindungsgemäßen Stellmittels 1. In Fig. 3 sind zur bessern Erkennbarkeit bestimmte Bauteile entfernt worden.

Der Sichteinstellmechanismus 100 umfasst ein erstes Teil 2, nämlich ein Sichtmittelhalterteil für ein Sichtmittel, wie beispielsweise einen Spiegel oder eine Kamera, und ein relativ dazu bewegbar und insbesondere verschwenkbar angeordnetes zweites Teil 4, nämlich ein Basisteil. Dieses Basisteil kann beispielsweise ortsfest an einem Fahrzeug befestigt werden. Zwischen zweitem Teil 4 und erstem Teil 2 ist wenigstens ein Stellmittel 1 vorgesehen, das u.a. der Verschwenkung des ersten Teils 2 relativ zum zweiten Teil 4 dient. Optional sind bei dieser Ausführungsform zwei Stellmittel 1 vorgesehen.

Das Stellmittel 1 umfasst ein Stellglied 6, über das der erste Teil 2 relativ zum zweiten Teil 4 bewegbar, und insbesondere verschwenkbar, ist. Das Stellglied ist zwischen erstem und zweitem Teil kraftgekoppelt. Optional ist eine Mehrzahl solcher Stellglieder vorgesehen.

Wie insbesondere in den Fig. 1 bis 9 dargestellt, umfasst das Stellglied 6 ein erstes Zahnkranzelement 10 und ein zweites Zahnkranzelement 20. Das erste Zahnkranzelement 10 ist mit wenigstens einem Detektor 12, nämlich einem Positionsdetektor, und das zweite Zahnkranzelement 20 mit wenigstens einem Aktor 22, nämlich einem Stellantrieb, kraftgekoppelt. Über den Stellantrieb 22 (siehe insbesondere Fig. 3) kann das Stellglied derart bewegt werden, dass es eine Bewegung zwischen erstem Teil 2 und zweitem Teil 4 bewirkt. Bei dieser Ausführungsform sind optional zwei Stellglieder 6 vorgesehen, die mit jeweils einem Stellantrieb 22 gekoppelt sind.

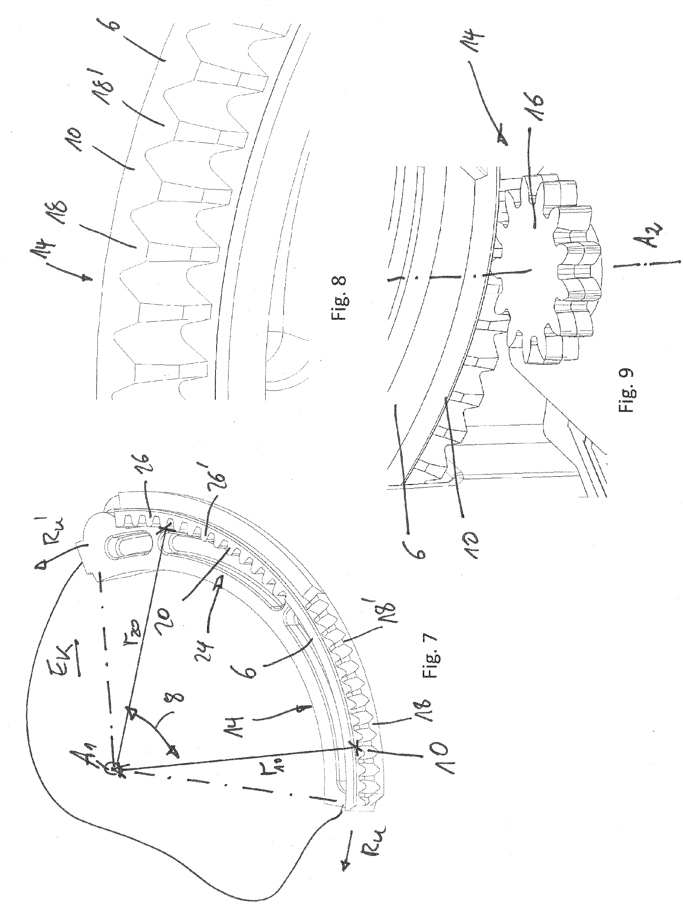

Wie in Fig. 3 dargestellt, ist optional der wenigstens eine Stellantrieb 22 derart mit dem Stellglied 6 kraftgekoppelt, dass eine Aktivierung des Stellantriebs 22 zu einer Bewegung des Stellglieds 6, und insbesondere zu seiner Verschwenkung um die in Fig. 1 dargestellte Achse A₁ führt. Eine entsprechende Bewegungsrichtung ist u.a. auch in Fig. 7 durch den Pfeil 8, betreffend eine Verschwenkrichtung des Stellglied 6, dargestellt.

Zum verschwenken weist das Stellglied 6 als zweites Zahnkranzsegment 20 optional ein Innen-Zahnkranzsegment, und insbesondere ein Innen-Evolventen-Zahnkranzsegment auf, das mit einem zweiten Ritzel 26 in Kraftkopplung, insbesondere in direkter Verzahnung steht, wobei dieses zweite Ritzel 26 mit dem Stellantrieb 22 kraftgekoppelt ist. Optional ist das zweite Zahnkranzsegment 20 als ein Evolventen-Zahnkranzsegment und hier insbesondere als ein Innen-Evolventen-Zahnkranzsegment ausgebildet. Es ist auch denkbar, das zweite Zahnkranzsegment 20 als Außen-Evolventen-Zahnkranzsegment auszuführen. Zweites Ritzel 26 und zweites Zahnkranzsegment 20 bilden optional eine Evolventenverzahnung 24.

Das zweite Ritzel 26 ist optional zu einer dritten Achse A₃ zentriert, die optional parallel zur ersten Achse A₁ verläuft, um die das Stellglied 6 zentriert und/oder verschwenkbar ist.

Die Ausbildung der Innen-Verzahnung bzw. des Innen-Zahnkranzsegments 20 ist in den Fig. 3 bis 7 ebenfalls im Detail dargestellt. Erkennbar sind die optionale Evolventen-Ausführung der Zahnung, umfassend die Zähne 28, und die Ausbildung des zweiten Zahnkranzsegments 20 am Stellglied 6.

Wie insbesondere in Fig. 7 dargestellt, ist das Stellglied 6 optional kreisbogenförmig und weiter optional als Schubstange ausgeführt. Bei dieser Ausführung bildet es optional einen Kreisbogen um die erste Achse A₁. Weiter optional sind bei dieser Ausführungsform das zweite Zahnkranzsegment 20 und das erste Zahnkranzsegment 10 um diese Achse A₁ zentriert. Das erste Zahnkranzsegment und das zweite Zahnkranzsegment bilden also optional einen Kreisbogen um die Achse A₁, und insbesondere um die gemeinsame Achse A₁. Sie weißen optional unterschiedliche Radien r₁₀ bzw. r₂₀ zur ersten Achse auf. Mit dem in Fig. 7 dargestellten Bezugszeichen E_{KR} ist die Erstreckungsebene des Stellgliedes 6 und insbesondere die Kopfebene des Kronenzahnrads, hier also die Ebene des ersten Zahnkranzsegments 10 dargestellt.

Wie insbesondere in Fig. 1 und 2 dargestellt, ist das Stellglied 6 optional am ersten Teil 2 ortsfest und gelenkig gelagert. Dafür ist eine Eingriffslagerung 42 vorgesehen, wobei am Stellglied ein Eingriffselement 44 und am ersten Teil 2 eine Eingriffselementaufnahme 46 vorgesehen ist. Das Resultat ist eine gelenkige Lagerung, sodass bei einer Axialbewegung des Stellglieds 6 in seiner Umfangsrichtung Ru eine Schwenkbewegung am ersten Teil 2 relativ zum zweiten Teil 4 resultiert. Diese Axialbewegung wird durch die Verzahnung 24 und dem Stellantrieb 22 bewirkt.

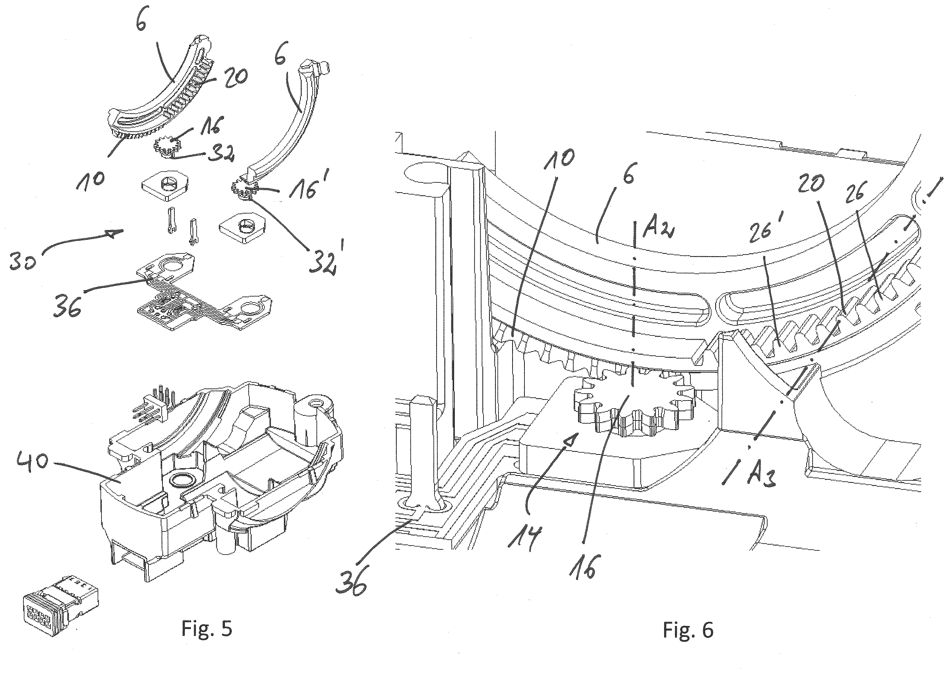

Wie ebenfalls in den Fig. 1 bis 9 dargestellt, umfasst das Stellglied 6 neben dem zweiten Zahnkranzsegment 20 auch das erste Zahnkranzsegment 10, das einem Detektor 12, nämlich einem Positionsdetektor, zugeordnet ist. Über diese Ausführung ist eine Positionsdetektion des ersten Teils 2 relativ zum zweiten Teil 4 möglich. Dazu steht das erste Zahnkranzsegment 10 mit einem ersten Ritzel 16, und insbesondere einem ersten Evolventen-Ritzel, in Kraftkopplung, und insbesondere in direkter Verzahnung. Das erste Zahnkranzsegment 10 ist dabei optional als ein Kronenradsegment mit einer Mehrzahl an Zähen 18 ausgebildet und/oder Teil einer Kronenradverzahnung 14. Diese Ausführungsform ist insbesondere in den Fig. 6 bis 9 im Detail dargestellt.

Das erste Ritzel 16 ist optional zu einer zweiten Achse A₂ zentriert und insbesondere rotierbar, wobei die zweite Achse A₂ zur ersten Achse A₁ einen Schwenkwinkel von α>0°, und insbesondere vorzugsweise α=90°, aufweist. Dies ist insbesondere in Fig. 1 und in Fig. 3 darstellt.

Wie insbesondere in den Fig. 4 bis 6 im Detail dargestellt, ist optional das erste Ritzel 16 so ausgebildet, dass es den Positionsdetektor 12, antreibt. Die entsprechenden Bauteile sind optional durch ein Gehäuse 40 abgedeckt.

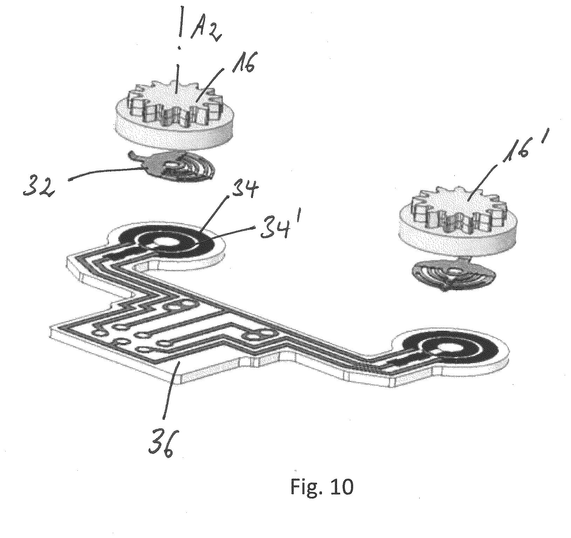

Der Positionsdetektor kann ein Potentiometer 30 umfassen, das über das erste Ritzel 16 angetrieben wird. Dies ist beispielsweise in Fig. 10 dargestellt. Dazu weist optional das erste Ritzel 16 wenigstens einen Kontaktschleifer 32 auf. Es ist auch möglich, einen Kontaktschleifer 32 vorzusehen und diesen mit dem ersten Ritzel 16 kraftzukoppeln, sodass es sich insbesondere bei einer Rotation des ersten Ritzels 16 bewegt und insbesondere mit diesem ersten Ritzel 16 rotiert. Der Kontaktschleifer 32 steht optional mit wenigstens einer ringförmigen Kontaktspur 34, und insbesondere einer Karbonkontaktspur, auf einer Leiterplatte 36 des Potentiometers 30 in Verbindung. Durch eine Rotation des ersten Ritzels ändert sich der Widerstandswert des Potentiometers über ein Verfahren des Kontaktschleifers 32 auf der Kontaktspur 34. Auf diese Weise ist eine Positionsdetektion des ersten Ritzels 16 und in direktem Rückschluss eine Positionsdetektion des Stellglieds 6 und somit der Position des zweiten Teils 4 relativ zum ersten Teil 2 möglich. Wie insbesondere in Fig. 10 dargestellt, ist optional die ringförmige Kontaktspur 32 zur zweiten Achse A₂ zentriert. Ringförmig bedeutet hier, dass die Kontaktspur 32 wenigstens einen Teilkreis umläuft.

Wie bereits erwähnt betrifft die Erfindung einen Sichteinstellmechanismus und ein Stellmittel, wobei die zuvor genannten Merkmale sowohl bei einem Sichteinstellmechanismus als auch bei einer Ausführungsform des Stellmittels vorgesehen sein können.

### Bezugszeichen

- 1: Stellmittel
- 2: erster Teil
- 4: zweiter Teil
- 6: Stellglied
- 8: Verschwenkrichtung
- 10: erstes Zahnkranzsegment
- 12: Detektor, nämlich Positionsdetektor
- 14: Kronenverzahnung
- 16: erstes Ritzel
- 18: Zähne
- 20: Zahnkranzsegment
- 22: Aktor, nämlich Stellantrieb
- 24: Evolventen-Verzahnung
- 26: zweites Ritzel
- 28: Zähne
- 30: Potentiometer
- 32: Kontaktschleifer
- 34: Kontaktspur
- 36: Leiterplatte
- 40: Gehäuse
- 42: Eingriffslagerung
- 44: Eingriffselement
- 46: Eingriffselementlager
- 100: Sichteinstellmechanismus
- A₁: Achse
- A₂: Achse
- A₃: Achse
- r₁₀: Radius
- r₂₀: Radius
- R_{U}: Schwenkrichtung
- E_{KR}: Ebene des Stellglieds

## Patentansprüche

1. Stellmittel zum Einstellen der Position eines ersten Teils (2), nämlich eines Sichtmittelhalterteils für ein Sichtmittel, relativ zu einem zweiten Teil (4), nämlich einem Basisteil, umfassend wenigstens ein Stellglied (6), über den das erste Teil (2) relativ zum zweiten Teil (4) bewegbar ist, wobei das Stellglied (6) wenigstens ein erstes Zahnkranzsegment (10) und wenigstens ein zweites Zahnkranzsegment (20) aufweist, wobei das zweite Zahnkranzsegment (20) mit wenigstens einem Aktor (22), nämlich einem Stellantrieb (22), kraftgekoppelt ist, sodass über den Stellantrieb (22) der erste Teil (2) relativ zum zweiten Teil (4), bewegbar ist,
**dadurch gekennzeichnet, dass**
das erste Zahnkranzsegment (10) des Stellgliedes (1) mit wenigstens einem Detektor (12), nämlich einem Positionsdetektor, kraftgekoppelt ist, wobei das erste Zahnkranzsegment (10) mit einem ersten Ritzel (16) in Kraftkopplung steht, das den Positionsdetektor (12) antreibt, bei dem über die aufgebrachte Bewegung, ein Detektionssignal initiiert wird, durch das eine Positionsdetektion des ersten Teils (2) relativ zum zweiten Teil (4) möglich ist.

2. Stellmittel nach Anspruch 1,
**dadurch gekennzeichnet, dass**
das Stellglied (6) am ersten Teil (2) ortsfest und gelenkig gelagert ist und/oder dass der Stellantrieb (22) am zweiten Teil (4) gelagert ist.

3. Stellmittel nach Anspruch 1 oder 2,
**dadurch gekennzeichnet, dass**
das Stellglied (6) als eine Schubstange ausgebildet ist.

4. Stellmittel nach einem der vorhergehenden Ansprüche,
**dadurch gekennzeichnet, dass**
das Stellglied (6) um wenigsten eine erste Achse A₁ verschwenkbar ausgebildet ist.

5. Stellmittel nach Anspruch 4,
**dadurch gekennzeichnet, dass**
das erste Zahnkranzsegment (10) und das zweite Zahnkranzsegment (20) zur ersten Achse A₁ zentriert sind.

6. Stellmittel nach einem der vorhergehenden Ansprüche,
**dadurch gekennzeichnet, dass**
das erste Zahnkranzsegment (10) ein Kronenradsegment ist.

7. Stellmittel nach Anspruch 6,
**dadurch gekennzeichnet, dass**
das erste Ritzel (16) zu einer zweiten Achse A₂ zentriert rotierbar ist, wobei die zweite Achse A₂ zur ersten Achse A₁ einen Schwenkwinkel α>0° und vorzugsweise α=90° aufweist.

8. Stellmittel nach einem der vorhergehenden Ansprüche,
**dadurch gekennzeichnet, dass**
der Positionsdetektor (16) wenigstens ein Potentiometer (30) umfasst das über das erste Ritzel (16) angetrieben wird.

9. Stellmittel nach einem der vorhergehenden Ansprüche,
**dadurch gekennzeichnet, dass**
das erste Ritzel (16) wenigstens einen Kontaktschleifer (32) aufweist oder mit diesem in Wirkverbindung steht, der mit wenigstens einer ringförmigen Kontaktspur (34) auf einer Leiterplatte (36) des Potentiometers (30) in Verbindung steht.

10. Stellmittel nach Anspruch 9,
**dadurch gekennzeichnet, dass**
die ringförmige Kontaktspur (32) zur zweiten Achse A₂ zentriert ist.

11. Stellmittel nach einem der vorhergehenden Ansprüche,
**dadurch gekennzeichnet, dass**
das zweite Zahnkranzsegment (20) ein Innen-Evolventen-Zahnkranzsegment oder ein Außen-Evolventen-Zahnkranzsegment ist und/oder Teil einer Evolventen-Verzahnung (24) ist.

12. Stellmittel nach einem der vorhergehenden Ansprüche,
**dadurch gekennzeichnet, dass**
das zweite Zahnkranzsegment (20) mit einem zweiten Ritzel (26) in Kraftkopplung steht.

13. Stellmittel nach Anspruch 12,
**dadurch gekennzeichnet, dass**
das zweite Ritzel (26) zu einer dritten Achse A₃ zentriert ist, die parallel zur ersten Achse A₁ verläuft.

14. Sichteinstellmechanismus (100), insbesondere für einen Seitenspiegel oder eine Kameraunit eines Motorfahrzeugs, umfassend ein erstes Teil (2), nämlich ein Sichtmittelhalterteil für ein Sichtmittel, wie beispielswiese einen Spiegel oder eine Kamera, und ein relativ dazu bewegbar und insbesondere verschwenkbar angeordnetes zweites Teil (4), nämlich ein Basisteil, und wenigstens ein Stellmittel (1) nach einem der vorhergehenden Ansprüche.

## Claims

1. Adjusting means for adjusting the position of a first part (2), more specifically a viewing means holder part for a viewing means, relative to a second part (4), more specifically a base part, comprising at least one adjusting element (6) via which the first part (2) can be moved relative to the second part (4), wherein
the adjusting element (6) has at least a first toothed ring segment (10) and at least one second toothed ring segment (20), wherein
the second toothed ring segment (20) is force-coupled to at least one actuator (22), more specifically an adjustment drive (22), in such a way that the first part (2) can be moved relative to the second part (4) by means of the adjustment drive (22),
**characterised in that**
the first toothed ring segment (10) of the adjustment element (1) is force-coupled to at least one sensor (12), more specifically a position sensor, wherein
the first toothed ring segment (10) is force-coupled to a first pinion (16), wherein this pinion drives the position sensor (12), in which, via the applied movement, a sensor signal is initiated, by means of which a position detection of the first part (2) relative to the second part (4) is made possible.

2. Adjusting means according to claim 1,
**characterised in that**
the adjusting element (6) is mounted in a stationary and articulated way on the first part (2) and/or the adjustment drive (22) is mounted on the second part (4).

3. Adjusting means according to claim 1 or 2,
**characterised in that**
the adjusting element (6) is designed as a push rod.

4. Adjusting means according to any of the preceding claims,
**characterised in that**
the adjusting element (6) is designed to be pivotable around at least a first axis A₁.

5. Adjusting means according to claim 4,
**characterised in that**
the first toothed ring segment (10) and the second toothed ring segment (20) are centred around the first axis A₁.

6. Adjusting means according to any of the preceding claims, **characterised in that**
the first toothed ring segment (10) is a contrate gear segment.

7. Adjusting means according to claim 6,
**characterised in that**
the first pinion (16) is rotatably centred around a second axis A₂, wherein the second axis A₂ has a pivot angle α > 0°, and preferably α = 90° relative to the first axis A₁.

8. Adjusting means according to any of the preceding claims,
**characterised in that**
the position sensor (16) comprises at least one potentiometer (30) which is driven via the first pinion (16).

9. Adjusting means according to any of the preceding claims,
**characterised in that**
the first pinion (16) has at least one contact wiper (32) or is operatively connected to such a wiper, wherein the contact wiper is connected to at least one annular contact track (34) on a circuit board (36) of the potentiometer (30).

10. Adjusting means according to claim 9,
**characterised in that**
the annular contact track (32) is centred around the second axis A₂.

11. Adjusting means according to any of the preceding claims,
**characterised in that**
the second toothed ring segment (20) is an internal involute toothed ring segment or an external involute toothed ring segment, and/or part of an involute gearing (24).

12. Adjusting means according to any of the preceding claims,
**characterised in that**
the second toothed ring segment (20) is force-coupled to a second pinion (26).

13. Adjusting means according to claim 12,
**characterised in that**
the second pinion (26) is centred around a third axis A₃ which runs parallel to the first axis A₁.

14. View adjusting mechanism (100), more specifically for a side view mirror or for a camera unit of a motor vehicle, comprising a first part (2), more specifically a viewing means holder part for a viewing means, for example a mirror or a camera, as well as a second part (4) which is movable and more specifically pivotable relative thereto, more specifically a base part, and at least an adjustment means (1) according to any of the preceding claims.

## Revendications

1. Moyen de réglage de la position d'une première partie (2), à savoir d'une partie support de moyen de visualisation pour un moyen de visualisation, par rapport à une deuxième partie (4), à savoir une partie de base, comprenant au moins un organe de réglage (6), au moyen duquel la première partie (2) est mobile par rapport à la deuxième partie (4), dans lequel
l'organe de réglage (6) présente au moins un premier segment de couronne dentée (10) et au moins un deuxième segment de couronne dentée (20), dans lequel
le deuxième segment de couronne dentée (20) est couplé par force à au moins un actionneur (22), à savoir un entraînement de réglage (22), de sorte que la première partie (2) soit mobile par rapport à la deuxième partie (4) au moyen de l'entraînement de réglage (22),
**caractérisé en ce que**
le premier segment de couronne dentée (10) de l'organe de réglage (1) est couplé par force à au moins un détecteur (12), à savoir un détecteur de position, dans lequel le premier segment de couronne dentée (10) est en couplage par force avec un premier pignon (16), qui entraîne le détecteur de position (12), pour lequel un signal de détection, par lequel une détection de position de la première partie (2) par rapport à la deuxième partie (4), est possible est initié au moyen du mouvement appliqué.

2. Moyen de réglage selon la revendication 1, **caractérisé en ce que**
l'organe de réglage (6) est monté fixe et articulé sur la première partie (2) et/ou que l'entraînement de réglage (22) est monté sur la deuxième partie (4).

3. Moyen de réglage selon la revendication 1 ou 2, **caractérisé en ce que**
l'organe de réglage (6) est réalisé comme une tige de poussée.

4. Moyen de réglage selon l'une quelconque des revendications précédentes,
**caractérisé en ce que**
l'organe de réglage (6) est réalisé de manière à pouvoir pivoter autour d'au moins un premier axe A₁.

5. Moyen de réglage selon la revendication 4, **caractérisé en ce que**
le premier segment de couronne dentée (10) et le deuxième segment de couronne dentée (20) sont centrés par rapport au premier axe A₁.

6. Moyen de réglage selon l'une quelconque des revendications précédentes,
**caractérisé en ce que**
le premier segment de couronne (10) est un segment de roue de chant.

7. Moyen de réglage selon la revendication 6, **caractérisé en ce que**
le premier pignon (16) peut être tourné de manière centrée par rapport à un deuxième axe A₂, dans lequel le deuxième axe A₂ présente un angle de pivotement α>0° et de préférence α=90° par rapport au premier axe A₁.

8. Moyen de réglage selon l'une quelconque des revendications précédentes,
**caractérisé en ce que**
le détecteur de position (16) comprend au moins un potentiomètre (30) qui est entraîné au moyen du premier pignon (16).

9. Moyen de réglage selon l'une quelconque des revendications précédentes,
**caractérisé en ce que**
le premier pignon (16) présente au moins un curseur de contact (32) ou est en liaison fonctionnelle avec celui-ci, qui est en liaison avec au moins une piste de contact annulaire (34) sur une carte de circuit imprimé (36) du potentiomètre (30).

10. Moyen de réglage selon la revendication 9, **caractérisé en ce que**
la piste de contact annulaire (32) est centrée par rapport au deuxième axe A₂.

11. Moyen de réglage selon l'une quelconque des revendications précédentes,
**caractérisé en ce que**
le deuxième segment de couronne dentée (20) est un segment de couronne dentée à développante interne ou un segment de couronne dentée à développante externe et/ou fait partie d'une denture à développante (24).

12. Moyen de réglage selon l'une quelconque des revendications précédentes,
**caractérisé en ce que**
le deuxième segment de couronne dentée (20) se trouve en couplage par force avec un deuxième pignon (26).

13. Moyen de réglage selon la revendication 12, **caractérisé en ce que**
le deuxième pignon (26) est centré par rapport à un troisième axe A₃, qui est parallèle au premier axe A₁.

14. Mécanisme de réglage de visualisation (100), notamment pour un rétroviseur latéral ou une unité de caméra d'un véhicule à moteur, comprenant une première partie (2), à savoir une partie support de moyen de visualisation pour un moyen de visualisation, comme par exemple un rétroviseur ou une caméra, et une deuxième partie (4) disposée de manière relativement mobile par rapport à celle-ci et notamment pivotante, à savoir une partie de base, et au moins un moyen de réglage (1) selon l'une quelconque des revendications précédentes.
